# FASCICULE DE BREVET EUROPEEN

(11) **EP 3 795 664 B1**
(45) Date de publication et mention de la délivrance du brevet: **25.01.2023**
(21) Numéro de dépôt: 20196365.9
(22) Date de dépôt: 16.09.2020
(51) Int. Cl.: C11D 3/04, C08J 3/05, C08L 33/26, C08L 101/14, C11D 3/06, C11D 3/37, C11D 17/00

(54) **DISPERSION AQUEUSE DE POLYMÈRE HYDROSOLUBLE OU HYDROGONFLABLE**
WÄSSRIGE DISPERSION EINES WASSERLÖSLICHEN ODER WASSERQUELLBAREN POLYMERS
WATER-SOLUBLE OR WATER-SWELLABLE POLYMER AQUEOUS DISPERSION

(30) Priorité: 17.09.2019 FR 1910225
(43) Date de publication de la demande: 24.03.2021
(73) Titulaire: S.P.C.M. SA, 42160 Andrézieux Bouthéon (FR)
(72) Inventeur: OMONT, Alexandre, 42163 ANDREZIEUX CEDEX (FR); SOUZY, Renaud, 42163 ANDREZIEUX CEDEX (FR); MICHEL, Marc-Edouard, 42163 ANDREZIEUX CEDEX (FR); SABOT, Bruno, 42163 ANDREZIEUX CEDEX (FR)
(74) Mandataire: Lavoix

(56) Documents cités:
- EP-A1- 0 562 341
- EP-A2- 0 357 962
- WO-A1-00/01757
- WO-A1-02/48254
- US-A- 4 364 836

## Description

La présente invention concerne les polymères hydrosolubles (floculants, épaississants) ou hydrogonflables sous forme de dispersion aqueuse. Plus précisément l'invention a pour objet une dispersion aqueuse comprenant des particules de polymère hydrosoluble de poids moléculaire moyen supérieure à 0.5 million de daltons ou de polymère hydrogonflable et un mélange d'au moins un sel de phosphate et d'au moins un sel de sulfate.

Les polymères hydrosolubles de haut poids moléculaire (poids moléculaire typiquement supérieure ou égale à 0,5 MDa) (floculants ou épaississants) et les polymères hydrogonflables sont largement utilisés dans de multiples applications telle que l'industrie du pétrole et du gaz, la fracturation hydraulique, les procédés de fabrication du papier, le traitement de l'eau, la déshydratation des boues, la construction, l'industrie minière, les cosmétiques, l'agriculture, l'industrie textile et la détergence.

A titre d'exemple, le caractère floculant des polymères synthétiques hydrosolubles de haut poids moléculaire est mis à profit dans le domaine du traitement de l'eau / la déshydratation des boues. En effet, après une étape optionnelle de coagulation où les particules colloïdales d'une eau donnée (assimilables à des sphères de taille inférieure à 1 micromètre) sont déstabilisées, la floculation représente l'étape où les particules sont rassemblées en agrégats de haut poids moléculaire pour engendrer une sédimentation rapide.

Le caractère épaississant de ces polymères peut quant à lui être exploité dans le domaine de la récupération assistée du pétrole (RAP ou EOR acronyme anglais de « Enhanced Oil Recovery »). L'efficacité du balayage par injection d'eau est généralement améliorée par l'addition de (co)polymères synthétiques hydrosolubles de haut poids moléculaire. Les bénéfices attendus et prouvés de l'utilisation de ces (co)polymères, au travers de la « viscosification » des eaux injectées, sont l'amélioration du balayage et la réduction du contraste de viscosité entre les fluides pour maîtriser leur ratio de mobilité dans le champ, et ce afin de récupérer le pétrole rapidement et efficacement. Ces (co)polymères augmentent la viscosité de l'eau.

Les polymères hydrogonflables peuvent absorber jusqu'à plusieurs centaines de fois leur masse en eau. Ils sont donc d'excellents hydrorétenteurs. Ils sont aussi utilisés dans de multiples applications. A titre d'exemple l'enrobage de matériel végétal, au moyen de polymère hydrogonflable, est une pratique d'intérêt dans le domaine agricole. L'enrobage de matériel végétal avec du polymère hydrogonflable a pour principal intérêt d'optimiser l'utilisation de l'eau et des substances actives associées.

Ces polymères hydrosolubles ou hydrogonflables peuvent être obtenus sous forme de dispersion aqueuse selon un procédé appelé polymérisation en dispersion aqueuse. Le polymère est polymérisé directement dans une solution aqueuse comprenant au moins un composé choisi parmi un sel minéral, un sel organique, un polymère organique dispersant et leurs mélanges.

Une autre technique consiste à formuler une dispersion polyphasique particulaire de polymère hydrosoluble ou hydrogonflant en dispersant des particules solides de polymère dans une solution aqueuse comprenant au moins un composé choisi parmi un sel minéral et/ou un sel organique, un polymère organique dispersant, un agent viscosifiant, éventuellement une huile minérale et leurs mélanges (telle que décrite dans la demande WO2018154219).

WO 00/01757 divulgue une dispersion aqueuse comprenant des polymères acryliques de haut poids moléculaire en présence de sels organiques ou inorganiques.

Cependant, quelle que soit la technique d'obtention de la dispersion aqueuse de polymères hydrosoluble ou hydrogonflant, la dispersion est particulièrement instable.

La première raison d'instabilité découle de l'affinité des polymères avec la phase continue aqueuse et la nécessité d'atténuer le phénomène d'hydratation pour éviter la gélification du système. L'atténuation sera d'autant plus complexe que l'on augmentera le taux d'incorporation de polymère dans la phase aqueuse. L'autre raison quant à elle résulte de la suspension insuffisante des particules de polymères, qui est notamment régie par la loi de Stokes, dans la phase continue aqueuse de ces dispersions.

Deux types d'additifs sont couramment utilisés pour la stabilisation :
- Les additifs permettant d'empêcher les particules de polymère hydrosoluble et/ou hydrogonflable de s'hydrater au contact de la phase continue aqueuse et donc d'entrainer une gélification de la formulation. Il s'agit principalement de sels ou d'espèces ioniques qui empêchent le déploiement du polymère (1) par écrantage de ses charges de surface et (2) par la force ionique en solution qu'ils génèrent. De nombreux sels sont référencés, en particulier les sels halogénés comme le CaCl2, CaBr2 mais aussi divers sels comme les sels d'ammoniums ou bien même des polymères dispersants ioniques.

Les sels peuvent être combinés à d'autre additifs comme des agents gonflants (gommes, argiles) permettant de limiter le déploiement des polymères hydrosolubles par un mécanisme d'encombrement stérique.
- Les additifs permettant de maintenir la poudre dans un bon état de dispersion et donc d'éviter les phénomènes de décantation ou de crémage. L'ensemble de ces additifs agissent sur les variables de la loi de stokes (densité, viscosité de la phase continue). La première classe d'additifs est celle des sels qui permettent d'augmenter l'effet suspensif par augmentation de la densité de la phase continue. Ils sont parfois combinés avec des agents rhéologiques et préférentiellement des agents aux propriétés thixotropes permettant de stopper les phénomènes de décantations. On peut citer les gommes xanthane, l'hydroxyethylcellulose, l'attapulgite, la laponite, l'hectorite.

La stabilisation des dispersions aqueuses de polymères hydrosolubles ou hydrogonflants reste une problématique notamment en raison de la dispersion imparfaite des particules de polymères (problème de sédimentation ou de crémage) et la limitation du taux d'incorporation de ces dernières dans la dispersion.

La Demanderesse a découvert de manière surprenante, qu'une dispersion aqueuse de polymère hydrosoluble et/ou hydrogonflant contenant un mélange d'au moins un sel de sulfate et d'au moins un sel de phosphate dans des proportions bien définies a une stabilité améliorée.

Les particules de polymère de cette dispersion sont plus stables dans le temps ce qui se traduit par une diminution de la décantation et du crémage. De plus, le seuil limite de matière active incorporable et dispersable dans la formulation est plus élevé. Ce seuil est défini par la limite à partir de laquelle on observe une déstabilisation de la formulation qui se traduit par une gélification.

Un premier aspect de l'invention selon la revendication 1 est donc une dispersion aqueuse comprenant des particules de polymère hydrosoluble de poids moléculaire moyen supérieure ou égale à 0,5 million de daltons ou de polymère hydrogonflable et un mélange d'au moins un sel de sulfate et d'au moins un sel de phosphate dont les proportions massiques sont comprises entre 25/75 et 75/25, de préférence entre 65/35 et 35/65, le mélange d'au moins un sel de sulfate et d'au moins un sel de phosphate est un mélange de sulfate d'ammonium et de phosphate de diammonium, le sel de phosphate n'est pas un sel de polyphosphate.

La présente invention ne met pas en oeuvre de sel de polyphosphate.

Un autre aspect de l'invention concerne l'utilisation de cette dispersion aqueuse de polymère hydrosoluble ou hydrogonflable dans l'industrie du pétrole et du gaz, la fracturation hydraulique, les procédés de fabrication du papier, le traitement de l'eau, la déshydratation des boues, la construction, l'industrie minière, les cosmétiques, l'agriculture, l'industrie textile et la détergence.

La présente invention ne met pas en oeuvre de sel de polyphosphate.

Tel qu'utilisé ici, le terme "polymère hydrosoluble" désigne un polymère qui donne une solution aqueuse sans particule insoluble lorsqu'il est dissous sous agitation pendant 4 heures à 25°C et avec une concentration de 20 g.L-1 dans l'eau.

Ce polymère hydrosoluble peut être linéaire ou structuré. Le terme structuré signifie que le polymère peut être sous forme de polymère branché (ramifié), sous forme de peigne (comb) ou sous forme d'étoile (star).

Le polymère « hydrogonflable », également connu comme polymère super-absorbant, a une capacité d'absorption d'eau supérieure à 10 fois son volume. De manière particulièrement avantageuse, au sein de la dispersion aqueuse de l'invention, le polymère hydrogonflable n'est pas ou peu hydrogonflé. Peu hydrogonflé signifie qu'il garde une capacité d'absorption d'eau supérieure à 10 fois son volume.

Selon la présente invention, le "poids moléculaire" du polymère hydrosoluble (c'est-à-dire le poids moléculaire moyen en poids) est déterminé par mesure de la viscosité intrinsèque. La viscosité intrinsèque peut être mesurée par des méthodes connues de l'homme du métier et peut notamment être calculée à partir des valeurs de viscosité réduite pour différentes concentrations par une méthode graphique consistant à tracer les valeurs de viscosité réduite (sur l'axe des ordonnées) en fonction des concentrations (sur l'axe des abscisses) et en extrapolant la courbe à une concentration nulle. La valeur de viscosité intrinsèque est lue sur l'axe des ordonnées ou à l'aide de la méthode des moindres carrés. Ensuite, le poids moléculaire moyen en poids peut être déterminé par la célèbre équation de Mark-Houwink :
[η] = K Mα
[η] représente la viscosité intrinsèque du polymère déterminée par la méthode de mesure de la viscosité en solution,
K représente une constante empirique,
M représente le poids moléculaire du polymère,
α représente le coefficient de Mark-Houwink
α et K dépendent du système particulier polymère-solvant

Le polymère hydrosoluble contenu dans la dispersion aqueuse de l'invention a un poids moléculaire moyen supérieur ou égale à 0,5 millions de daltons. Préférentiellement le poids moléculaire moyen est compris entre 0,5 et 40 millions de daltons, plus préférentiellement entre 5 et 30 millions de daltons.

Selon l'invention, le polymère hydrosoluble ou hydrogonflable est un homopolymère d'acrylamide ou de méthacrylamide ou copolymère d'acrylamide ou de méthacrylamide et d'un monomère anionique choisi parmi l'acide acrylique, l'acide méthacrylique l'acide 2-acrylamido-2-méthylpropane sulfonique et leurs sels, ou est un copolymère d'acrylamide ou de méthacrylamide et d'un monomère cationique choisi parmi l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de methacrylamido propyltrimethyl ammonium (MAPTAC).

Préférentiellement la dispersion aqueuse de l'invention comprend entre 5 et 60%, de préférence entre 10 et 35% en poids de particules de polymère hydrosoluble ou hydrogonflable par rapport au poids total de la dispersion.

Les particules de polymère hydrogonflable ou hydrosoluble ont de façon avantageuse un diamètre permettant leur dispersion. De préférence, les particules présentent un diamètre moyen allant de de 0,1 à 1000 µm, de préférence de 0,1 à 500 µm. Le diamètre moyen des particules peut être déterminé par toute méthode connue de l'homme du métier, par exemple par microscopie binoculaire.

Outre le polymère hydrosoluble ou hydrogonflable, la dispersion aqueuse comprend un composé qui a une fonction d'agent d'équilibrage. Il s'agit d'un composé hydrosoluble ou miscible à l'eau. Au sein de la dispersion selon l'invention, il permet d'inhiber totalement ou partiellement l'hydratation du polymère. Ainsi, au sein de cette dispersion aqueuse, en présence de ce composé, le polymère est présent sous forme de particules.

La dispersion selon l'invention comprend comme agent d'équilibrage un mélange d'au moins un sel de sulfate et d'au moins un sel de phosphate dont les proportions massiques sont comprises entre 25/75 et 75/25, préférentiellement entre 65/35 et 35/65.

Préférentiellement, la dispersion aqueuse de polymère comprend entre 10 et 40% en poids d'un mélange d'au moins un sel de sulfate et d'au moins un sel de phosphate par rapport au poids total de la dispersion.

Le sel de sulfate est le sulfate d'ammonium.

Le sel de phosphate est le phosphate de diammonium.

La présente invention ne met pas en oeuvre de sel de polyphosphate.

Le mélange d'au moins un sel de sulfate et d'au moins un sel de phosphate est le mélange de sulfate d'ammonium et de phosphate de diammonium.

Outre le mélange d'au moins un sel de phosphate et d'au moins un sel de sulfate la dispersion aqueuse peut comprendre au moins un composé ayant une fonction d'équilibrage choisi parmi :
les sels minéraux ou organiques comprenant au moins un anion choisi parmi les halogénures ;
les sels minéraux ou organiques comprenant au moins un cation choisi parmi le sodium, le potassium, l'ammonium, le magnésium, le calcium, l'aluminium ;
les mélanges d'au moins deux de ces sels ; tels que les polymères ou les copolymères à base d'acide acrylique, d'acide 2-acrylamido-2-méthylpropane sulfonique et leurs sels et d'acrylamide de poids moléculaire allant de 1000 à 30 000 daltons.

Avantageusement, la dispersion aqueuse de polymère hydrosoluble ou hydrogonflable comprend de 10 à 40% en poids de sel minéral ou de sel organique et de 5 à 30 % en poids de polymère organique dispersant par rapport au poids total de la dispersion aqueuse. Il doit être compris que ces pourcentages représentent le pourcentage en poids total des sels dans la dispersion incluant donc les sels de sulfate et de phosphate.

Préférentiellement la dispersion comprend un polymère organique dispersant choisis parmi les polymères de poids moléculaire allant de 500 à 100 000 daltons, de préférence allant de 1 000 à 50 000 daltons ; plus préférentiellement allant de 1000 à 30 000 daltons.

De préférence, la dispersion contient moins de 30 % en poids de polymère organique dispersant, de préférence de 5 à 20% en poids.

Selon l'invention, la dispersion peut également comprendre au moins un additif choisi parmi les alcools polyfonctionnels, par exemple le glycérol, le polyéthylèneglycol et le polypropylèneglycol ; les polyalkylènes glycol. Avantageusement, l'additif est présent en une quantité en masse de dispersion allant de 0,001 à 20 % en poids, préférentiellement de 0,5 à 10%.

Les polymères hydrosolubles ou hydrogonflables sous forme de dispersion aqueuse sont obtenus par polymérisation en dispersion aqueuse en présence d'un mélange d'au moins un sel de sulfate et d'au moins un sel de phosphate dont les proportions massiques sont comprises entre 25/75 et 75/25, de préférence entre 35/645 et 65/35, ou en formulant la dispersion de polymère hydrosoluble ou hydrogonflant en dispersant des particules solides de polymère dans une solution aqueuse comprenant un mélange d'au moins un sel de sulfate et d'au moins un sel de phosphate dont les proportions massiques sont comprises entre 25/75 et 75/25, de préférence entre 35/645 et 65/35.

Sans vouloir être lié par une quelconque théorie, lors de la préparation de la dispersion par polymérisation, les monomères sont solubles dans la solution aqueuse comprenant un mélange d'au moins un sel de sulfate et d'au moins un sel de phosphate, le mélange d'au moins un sel de sulfate et d'au moins un sel de phosphate est un mélange de sulfate d'ammonium et de phosphate de diammonium, le sel de phosphate n'est pas un sel de polyphosphate, dont les proportions massiques sont comprises entre 25/75 et 75/25, de préférence entre 35/645 et 65/35, le polymère formé ne l'est pas formant ainsi la dispersion.

L'homme de métier saura choisir et adapter les conditions opératoires pour optimiser la polymérisation en dispersion aqueuse ou la formulation de la dispersion aqueuse de polymère.

Un autre aspect de l'invention concerne l'utilisation selon le revendication 9 de la dispersion aqueuse comprenant des particules de polymère hydrosoluble de masse moléculaire moyenne supérieure ou égale à 0,5 million de daltons ou de polymère hydrogonflable et d'un mélange d'au moins un sel de de sulfate et d'au moins un sel de phosphate dont les proportions massiques sont comprises entre 25/75 et 75/25, de préférence entre 35/65 et 65/35, le mélange d'au moins un sel de sulfate et d'au moins un sel de phosphate est un mélange de sulfate d'ammonium et de phosphate de diammonium, le sel de phosphate n'est pas un sel de polyphosphate, dans l'industrie du pétrole et du gaz, la fracturation hydraulique, les procédés de fabrication du papier, le traitement de l'eau, la déshydratation des boues, la construction, l'industrie minière, les cosmétiques, l'agriculture, l'industrie textile et la détergence. Dans ces applications, se sont notamment les propriétés floculantes ou épaississantes qui sont exploitées ou encore le caractère hydro-rétenteur pour les polymères hydrogonflants.

Les exemples suivants illustrent l'invention sans toutefois en limiter la portée.

### Exemples

### Exemple 1 : Stabilité suspensive, statique à 20°C, de dispersions aqueuses d'homopolymères d'acrylamide hydrogonflables contenant différents ratios SAM (Sulfate dammonium) / DAP (Phosphate de diammonium).

350 g de dispersion aqueuse de polymère préalablement préparée par polymérisation en dispersion (concentration massique en polymère : 22%, et en SAM ou mélange SAM/DAP : 25%) sont introduits dans un tube en verre (diamètre : 50 mm, hauteur : 300 mm). Au terme d'1 an, la hauteur de phase déstabilisée (crémage ou décantation) est évaluée en pourcentage par rapport à la hauteur totale initiale de dispersion aqueuse.

### [Table 1]

**Tableau 1**

| Dispersion aqueuse | Ratio massique SAM/DAP | Stabilité | |
|---|---|---|---|
| A | 100/0 | Décantation | 50% |
| B | 40/60 | Crémage | 35% |
| C | 50/50 | Stable | 0% |
| D | 60/40 | Décantation | 31% |

La dispersion aqueuse de polymère hydrogonflable est stable lorsqu'elle est préparée dans un mélange SAM/DAP 50/50. La stabilité reste raisonnable pour des préparations dans des mélanges SAM/DAP 60/40 ou 40/60. La dispersion aqueuse est instable lorsqu'elle est préparée uniquement en présence de SAM.

Lorsque les compositions B et D sont mélangées après l'étude de stabilité, les compositions redeviennent stables. La décantation est donc réversible.

### Exemple 2 : Stabilité suspensive, statique à 50°C, de dispersions aqueuses de polyacrylamides.

Les dispersions suivantes ont été préparées par polymérisation en solution aqueuse.

Dispersion aqueuse C : 22% en poids d'homopolymère d'acrylamide hydrogonflable (exemple 1), 25 % en poids d'un mélange SAM/DAP 50/50 (ratio massique)

Dispersion aqueuse E : 22% en poids de copolymère hydrosoluble d'acrylamide et d'acrylate de sodium (70/30, %mol) de poids moléculaire moyen égal à 15 millions de daltons,20 % en poids de SAM.

La stabilité au terme de 2 mois des dispersions C et E est évaluée selon la même méthode que pour l'exemple 1, à une température de 50°C.

### [Table 2]

**Tableau 2**

| Dispersion aqueuse | Stabilité | |
|---|---|---|
| C | Stable | 0,1% |
| E | Décantation | 50% |

Pour cette étude de stabilité accélérée (50°C, 2 mois), une dispersion aqueuse de polymère dans un mélange massique SAM/DAP (50/50) est plus stable qu'une dispersion contenant uniquement du SAM.

Lorsque la composition E est mélangée après l'étude de stabilité, la composition ne redevient pas stable. La décantation n'est pas réversible.

### Exemple 3 : Seuil limite d'incorporation de matière active dans une dispersion aqueuse d'homopolymères d'acrylamide hydrogonflable.

Pour les cas 1 et 2 suivants, les dispersions ont été préparées par polymérisation en dispersion aqueuse. Pour chaque cas, seule la concentration massique en polymère a été changée. Toutes les dispersions contiennent 25% en poids de sel (SAM ou mélange SAM/DAP).

Pour chaque dispersion, la viscosité Brookfield (module LV3 ou LV4, 30 tr.min-1, 25°C°) a été mesurée et la filtrabilité a été déterminée en passant la dispersion à travers un filtre de 300 µm.

### Cas 1 : Dispersions aqueuses de polymère hydrogonflable à base de SAM.

### [Table 3]

**Tableau 3**

| Concentration massique en polymère (%) | Viscosité Brookfield (cps) | Filtrabilité |
|---|---|---|
| 22 | 800 | Filtrable |
| 25 | 4300 | Non filtrable |
| 26.5 | 5000 | Non filtrable |

### Cas 2 : Dispersions aqueuses de polymère hydrogonflable à base de SAM/DAP (ratio massique 50/50).

### [Table 4]

**Tableau 4**

| Concentration massique en polymère (%) | Viscosité Brookfield (cps) | Filtrabilité |
|---|---|---|
| 22 | 500 | Filtrable |
| 25 | 800 | Filtrable |
| 26.5 | 1400 | Filtrable |

La comparaison des résultats des tableaux 3 et 4 met en évidence qu'un mélange SAM/DAP approprié, permet de limiter l'augmentation de la viscosité et d'éviter l'agglomération des particules de polymère (l'agglomération rend les dispersions non filtrables à 300 µm, phénomène de gélification) lorsque la concentration massique en polymère est augmentée.

### Exemple 4 : Formulation et évaluation de la stabilité d'une dispersion aqueuse de polymère hydrosoluble.

Cet exemple porte sur la formulation de dispersions aqueuses de polymère hydrosoluble P1 par dispersion de particules solides du dit polymère dans une solution aqueuse. La concentration massique finale en polymère est de 10 %.

### a) Formulation des dispersions de polymère hydrosoluble.

Le polymère hydrosoluble P1 est un copolymère d'acrylamide présentant une cationicité globale de 10 mol%. Le copolymère avant formulation de la dispersion se présente sous la forme physique d'une poudre ayant une granulométrie comprise entre : 5 µm et 300 µm dont la matière sèche est de 90%.

Formulations des dispersions aqueuses de polymère P1 :

### [Table 5]

**Tableau 5**

| Ingrédient | Quantité (% massique) | |
|---|---|---|
| | Dispersion F | Dispersion G |
| Eau | 47,58 | 47,59 |
| Sulfate d'ammonium (SAM) | 23,59 | 39,31 |
| Phosphate de diammonium(DAP) | 15,73 | 0,00 |
| Attagel 50 (BASF) | 2,00 | 2,00 |
| Polymère P1 | 11,10 | 11,10 |
| Total | 100,00 | 100,00 |
| Ratio SAM/DAP | 60/40 | 100/0 |
| Concentration P1 (% massique) | 10,0 | 10,0 |

### b) Evaluation de la stabilité dynamique des dispersons aqueuses de polymère hydrosoluble

La stabilité dynamique a été caractérisée par mesure de la vitesse de sédimentation

L'appareillage utilisé est le LUM de Lumisizer. Le Lumisizer est une centrifugeuse analytique, qui, de manière accélérée permet de déterminer la stabilité des dispersions de polymères. Grâce à un système optique de très haute performance, le LUMiSizer permet d'analyser des hauteurs ou des vitesses de sédimentation et / ou de crémage des particules solides de polymère. La hauteur est exprimée en mm tandis que la vitesse est exprimée en mm/mois. Plus cette valeur est importante, moins la dispersion est stable.

### [Table 6]

**Tableau 6**

| Dispersion | | Vitesse de sédimentation (mm/mois) |
|---|---|---|
| F | Invention | 19 |
| G | Référence | 31 |

Cet exemple démontre que la dispersion aqueuse de polymère F contenant 10% en poids de polymère cationique et formulée avec le mélange SAM/DAP (60/40) est plus stable que la dispersion G formulée uniquement avec du SAM.

### Exemple 5 : Formulation et évaluation de la stabilité d'une dispersion aqueuse de polymère hydrosoluble.

Cet exemple porte sur la formulation de dispersions aqueuses de polymère hydrosoluble P1 par dispersion de particules solides du dit polymère dans une solution aqueuse. La concentration massique finale en polymère est de 20 %.

### a) Formulation des dispersions de polymère hydrosoluble.

### [Table 7]

**Tableau 7**

| Ingrédient | Quantité (% massique) | |
|---|---|---|
| | Dispersion H | Dispersion I |
| Eau | 40,82 | 40,82 |
| Sulfate d'ammonium (SAM) | 20,99 | 34,98 |
| Phosphate de diammonium(DAP) | 13,99 | 0,00 |
| Attagel 50 (BASF) | 2,00 | 2,00 |
| Polymère P1 | 22,20 | 22,20 |
| Total | 100,00 | 100,00 |
| Ratio SAM/DAP | 60/40 | 100/0 |
| Concentration P1 (% massique) | 20,0 | 20,0 |

### b) Evaluation de la stabilité dynamique des dispersons aqueuses de polymère hydrosoluble

La stabilité dynamique a été caractérisée par mesure de la vitesse de sédimentation (comme pour exemple 4)

### [Table 8]

**Tableau 8**

| Dispersion | | Vitesse de sédimentation (mm/mois) |
|---|---|---|
| H | Invention | 14 |
| I | Référence | 27 |

Ce nouvel exemple démontre que la dispersion aqueuse de polymère H contenant 20% en poids de polymère cationique et formulée avec le mélange SAM/DAP (ratio massique : 40/60) est une nouvelle fois plus stable que la dispersion I formulée uniquement avec du SAM

## Revendications

1. Dispersion aqueuse comprenant des particules de polymère hydrosoluble de masse moléculaire moyenne supérieure ou égale à 0,5 million de daltons ou de polymère hydrogonflable et un mélange d'au moins un sel de sulfate et d'au moins un sel de phosphate dont les proportions massiques sont comprises entre 25/75 et 75/25, le polymère hydrosoluble ou hydrogonflable est un homopolymère d'acrylamide ou de méthacrylamide ou un copolymère d'acrylamide ou de méthacrylamide et d'un monomère anionique choisi parmi l'acide acrylique, l'acide méthacrylique, l'acide 2-acrylamido-2-méthylpropane sulfonique et leurs sels ou est un copolymère d'acrylamide ou de méthacrylamide et d'un momomère cationique choisi parmi l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de methacrylamido propyltrimethyl ammonium (MAPTAC),
le mélange d'au moins un sel de sulfate et d'au moins un sel de phosphate est un mélange de sulfate d'ammonium et de phosphate de diammonium, le sel de phosphate n'est pas un sel de polyphosphate.

2. Dispersion aqueuse selon la revendication 1, **caractérisée en ce qu'**elle comprend entre 5 et 60%, de préférence entre 10 et 35% en poids, de particules de polymère hydrosoluble ou hydrogonflable.

3. Dispersion aqueuse selon la revendication 1 ou 2, **caractérisée en ce qu'**elle comprend entre 10 et 40% en poids du mélange d'au moins un sel de sulfate et d'au moins un sel de phosphate.

4. Dispersion aqueuse selon l'une quelconque des revendications 1 à 3,
**caractérisée** en ce la dispersion aqueuse comprend le mélange d'au moins un sel de sulfate et d'au moins un sel de phosphate dont les proportions massiques sont comprises entre 65/35 et 35/65.

5. Dispersion aqueuse selon l'une quelconque des revendications 1 à 4, **caractérisée en ce que** le polymère hydrosoluble a un poids moléculaire moyen compris entre 0,5 et 40 millions de daltons, plus préférentiellement entre 5 et 30 millions de daltons.

6. Dispersion aqueuse selon l'une quelconque des revendications 1 à 5, **caractérisée en ce que** les particules de polymère ont un diamètre moyen allant de 0,1 à 1000 µm, de préférence de 0,1 à 500 µm.

7. Dispersion aqueuse selon l'une quelconque des revendications 1 à 6, **caractérisée en ce qu'**elle comprend en outre un polymère organique dispersant choisis parmi les polymères de poids moléculaire allant de 500 à 100 000 daltons, de préférence allant de 1 000 à 50 000 daltons ; plus préférentiellement allant de 1000 à 30 000 daltons.

8. Dispersion aqueuse selon la revendication 7, **caractérisée en ce qu'**elle comprend moins de 30 % en poids de polymère organique dispersant, de préférence de 5 à 20% en poids.

9. Utilisation de la dispersion selon l'une quelconque des revendications 1 à 8 dans l'industrie du pétrole et du gaz, la fracturation hydraulique, les procédés de fabrication du papier, le traitement de l'eau, la déshydratation des boues, la construction, l'industrie minière, les cosmétiques, l'agriculture, l'industrie textile et la détergence.

## Patentansprüche

1. Wässrige Dispersion, umfassend Teilchen eines wasserlöslichen Polymers mit einem mittleren Molekulargewicht von 0,5 Millionen Dalton oder mehr oder eines wasserquellbaren Polymers und ein Gemisch aus mindestens einem Sulfatsalz und mindestens einem Phosphatsalz, deren Massenanteile im Bereich von 25/75 bis 75/25 liegen, wobei das wasserlösliche oder wasserquellbare Polymer ein Homopolymer von Acrylamid oder Methacrylamid oder ein Copolymer von Acrylamid oder Methacrylamid und einem anionischen Monomer ist, ausgewählt aus Acrylsäure, Methacrylsäure, 2-Acrylamido-2-methylpropansulfonsäure und deren Salze oder ein Copolymer von Acrylamid oder Methacrylamid und ein kationisches Monomer ist, ausgewählt aus quaternisiertem Dimethylaminoethylacrylat (ADAME), quaternisiertem Dimethylaminoethylmethacrylat (MADAME), Dimethyldiallylammoniumchlorid (DADMAC), Acrylamidopropyltrimethylammoniumchlorid (APTAC) und Methacrylamidopropyltrimethylammoniumchlorid (MAPTAC),
wobei das Gemisch aus mindestens einem Sulfatsalz und mindestens einem Phosphatsalz ein Gemisch aus Ammoniumsulfat und Diammoniumphosphat ist, das Phosphatsalz kein Polyphosphatsalz ist.

2. Wässrige Dispersion nach Anspruch 1, **dadurch gekennzeichnet, dass** sie zwischen 5 und 60 Gewichtsprozent, vorzugsweise zwischen 10 und 35 Gewichtsprozent, wasserlösliche oder wasserquellbare Polymerteilchen umfasst.

3. Wässrige Dispersion nach Anspruch 1 oder 2, **dadurch gekennzeichnet, dass** sie zwischen 10 und 40 Gewichtsprozent des Gemischs aus mindestens einem Sulfatsalz und mindestens einem Phosphatsalz umfasst.

4. Wässrige Dispersion nach einem der Ansprüche 1 bis 3, **dadurch gekennzeichnet, dass** die wässrige Dispersion das Gemisch aus mindestens einem Sulfatsalz und mindestens einem Phosphatsalz umfasst, deren Massenanteile zwischen 65/35 und 35/65 liegen.

5. Wässrige Dispersion nach einem der Ansprüche 1 bis 4, **dadurch gekennzeichnet, dass** das wasserlösliche Polymer ein mittleres Molekulargewicht von 0,5 bis 40 Millionen Dalton, bevorzugter von 5 bis 30 Millionen Dalton, aufweist.

6. Wässrige Dispersion nach einem der Ansprüche 1 bis 5, **dadurch gekennzeichnet, dass** die Polymerpartikel einen mittleren Durchmesser von 0,1 bis 1000 µm, vorzugsweise von 0,1 bis 500 µm, aufweisen.

7. Wässrige Dispersion nach einem der Ansprüche 1 bis 6, **dadurch gekennzeichnet, dass** sie zusätzlich ein dispergierendes organisches Polymer umfasst, das - aus Polymeren mit einem Molekulargewicht von 500 bis 100.000 Dalton ausgewählt ist, vorzugsweise von 1000 bis 50.000 Dalton; bevorzugter von 1000 bis 30.000 Dalton.

8. Wässrige Dispersion nach Anspruch 7, **dadurch gekennzeichnet, dass** sie weniger als 30 Gewichtsprozent dispergierendes organisches Polymer, vorzugsweise 5 bis 20 Gewichtsprozent, umfasst.

9. Verwendung der Dispersion nach einem der Ansprüche 1 bis 8 in der Öl- und Gasindustrie, bei der hydraulischen Frakturierung, bei Papierherstellungsverfahren, bei der Wasseraufbereitung, bei der Schlammentwässerung, im Bauwesen, im Bergbau, in der Kosmetik, in der Landwirtschaft, in der Textilindustrie und in der Waschmittelindustrie.

## Claims

1. Aqueous dispersion comprising particles of water-soluble polymer of average molecular weight greater than or equal to 0.5 million daltons, or of water-swellable polymer, and a mixture of at least one sulfate salt and at least one phosphate salt in weight proportions of between 25:75 and 75:25, the water-soluble or water-swellable polymer is a homopolymer of acrylamide or methacrylamide or a copolymer of acrylamide or methacrylamide and of an anionic monomer selected from among acrylic acid, methacrylic acid, 2-acrylamido-2-methylpropane sulfonic acid and the salts thereof, or is a copolymer of acrylamide or methacrylamide and of a cationic monomer selected from among quaternized dialkylaminoethyl acrylate (DAMEA), quaternized dialkylaminoethyl methacrylate (DAMEMA), diallyldimethylammonium chloride (DADMAC), acrylamido propyltrimethylammonium chloride (APTAC), and methacrylamido propyltrimethylammonium chloride (MAPTAC),
the mixture of at least one sulfate salt and at least one phosphate salt being a mixture of ammonium sulfate and diammonium phosphate,
the phosphate salt is not a polyphosphate salt.

2. The aqueous dispersion according to claim 1, **characterized in that** it comprises between 5 and 60 weight %, preferably between 10 and 35 weight % of particles of water-soluble or water-swellable polymer.

3. The aqueous dispersion according to claim 1 or 2, **characterized in that** it comprises between 10 and 40 weight % of the mixture of at least one sulfate salt and at least one phosphate salt.

4. The aqueous dispersion according to any of claims 1 to 3, **characterized in that** the aqueous dispersion comprises the mixture of at least one sulfate salt and at least one phosphate salt in weight proportions of between 65:35 and 35:65.

5. The aqueous dispersion according to any of claims 1 to 4, **characterized in that** the water-soluble polymer has an average molecular weight of between 0.5 and 40 million daltons, more preferably between 5 and 30 million daltons.

6. The aqueous dispersion according to any of claims 1 to 5, **characterized in that** the polymer particles have a mean diameter ranging from 0.1 to 1000 µm, preferably from 0.1 to 500 µm.

7. The aqueous dispersion according to any of claims 1 to 6, **characterized in that** it comprises a dispersive organic polymer selected from among polymers of molecular weight ranging from 500 to 100 000 daltons, preferably ranging from 1 000 to 50 000 daltons; more preferably ranging from 1 000 to 30 000 daltons.

8. The aqueous dispersion according to claim 7, **characterized in that** it comprises less than 30 weight % of dispersive organic polymer, preferably from 5 to 20 weight %.

9. Use of the dispersion according to any of claims 1 to 8 in the petroleum and gas industry, hydraulic fractionation, paper production processes, water treatment, sludge dewatering, building industry, mining industry, cosmetics, agriculture, textile industry and detergents.
